# EUROPEAN PATENT APPLICATION

(11) **EP 3 496 326 A1**
(43) Date of publication of application: **12.06.2019**
(21) Application number: 17836427.9
(22) Date of filing: 04.08.2017
(51) Int. Cl.: H04L 5/14, H04W 72/00

(54) **METHOD AND DEVICE FOR MAPPING AND DETECTING CHANNEL, BASE STATION AND USER EQUIPMENT**

(30) Priority: 05.08.2016 CN 201610640659
(71) Applicant: NTT DOCOMO, INC., Tokyo 100-6150 (JP)
(72) Inventor: LIU, Jiahui, Beijing 100190 (CN); MU, Qin, Beijing 100190 (CN); LIU, Liu, Beijing 100190 (CN); JIANG, Huiling, Beijing 100190 (CN)
(74) Representative: Hoffmann Eitle
(86) International application number: PCT/CN2017/096005
(87) International publication number: WO 2018/024246

(57) **Abstract**

The present invention relates to a method and device for mapping a channel in a time division duplex (TDD) mode, a base station using the method and device for mapping a channel, a method and device for detecting a channel for a user equipment in a time division duplex (TDD) mode, and a user equipment using the method and device for detecting a channel. The method for mapping a channel in the time division duplex (TDD) mode comprises: on a first carrier frequency, alternately mapping a first broadcast channel and a second broadcast channel onto the sixth subframe of a plurality of subframes included in each frame configured for uplink-downlink in the TDD mode, and mapping a third broadcast channel onto the first subframe of the plurality of subframes; and on a second carrier frequency, mapping the first broadcast channel onto the sixth subframe, at every other frame.

## Description

### TECHNICAL FIELD

The present disclosure relates to a field of mobile communications, and particularly to a channel mapping method and apparatus for a time division duplex (TDD) mode, a base station using the channel mapping method and apparatus, a channel detecting method and apparatus in a user equipment for a time division duplex (TDD) mode, and a user equipment using the channel detecting method and apparatus.

### BACKGROUND

With the development of the mobile communications industry and the growing demand for mobile data services, people are increasingly demanding high speed and quality of service (Qos) of the mobile communications. Currently, Narrow Band Internet of Things (NB-IoT) based on the cellular network becomes an important branch of Internet of Everything. NB-IoT is built on the cellular network and consumes a frequency band of only about 180KHz, it can be deployed directly on the GSM network, the UMTS network or the LTE network, so as to reduce deployment costs and achieve smooth upgrades.

In the NB-IoT scenario based on the LTE network system, both the Long Term Evolution (LTE) system and the Advanced Long Term Evolution System (LTE-A) are based on the Orthogonal Frequency Division Multiplexing (OFDM) technology, it is mainly a time-frequency two-dimensional data form in the OFDM system. Thus, it is necessary to reasonably map the signals that need to be transmitted to the physical resource block (PRB) and the subframes therein in time-frequency two-dimension, so as to achieve efficient transmission of signals, avoid resource conflicts, and implement detection of the received signals by the user equipment (UE).

Frequency Division Duplex (FDD) and Time Division Duplex (TDD) are two different duplex modes under the LTE standard. In the FDD mode, there are two separate channel links, one for transmitting information downwards and the other for transmitting information upwards. There is a guard band between the two channel links to prevent mutual interference between adjacent transmitter and receiver. In the TDD mode, transmitting and receiving signals are carried out in different time slots of the same frequency channel, separated by adopting certain guaranteed time with respect to each other. The FDD has strong data transmission capability because uplink and downlink are carried out simultaneously in different frequency bands, but it also requires higher spectrum resources. For the narrow-band transmission mode such as NB-IoT, the TDD will fulfill better.

Currently, in the channel mapping scheme for the FDD mode in the NB-IoT scenario, the primary synchronization signal (PSS) is mapped to the sixth subframe (subframe #5, wherein the first subframe among a plurality of subframes is denoted as subframe #0) in each frame (10 ms), the secondary synchronization signal (SSS) is mapped to the tenth subframe (subframe #9), and the physical broadcast channel (PBCH) is mapped to the first subframe (subframe #0). For the TDD mode, if it is considered to use still the channel mapping scheme in the FDD mode, since the subframe #9 in configuration 0 for the TDD mode is uplink, transmission of the SSS cannot be performed.

Therefore, it is desirable to provide a channel mapping method for the TDD mode, which can implement reasonable mapping of the primary synchronization signal (PSS), the secondary synchronization signals (SSS), and the physical broadcast channel (PBCH) according to uplink-downlink configuration for the TDD mode based on a primary signal sequence design for the FDD mode, without introducing additional overhead. In addition, there is still a need to provide a channel detecting method in a user equipment for a TDD mode, which enables the user equipment (UE) to accurately detect the primary synchronization signal (PSS), the secondary synchronization signal (SSS), and the physical broadcast channel (PBCH) or the like based on the channel mapping scheme for the TDD mode, so as to complete the process of cell search synchronization and so on.

### SUMMARY

In view of the above problems, the present disclosure provides a channel mapping method and apparatus for a time division duplex (TDD) mode, a base station using the channel mapping method and apparatus, a channel detecting method and apparatus in a user equipment for a time division duplex (TDD) mode, and a user equipment using the channel detecting method and apparatus.

According to an embodiment of the present disclosure, there is provided a channel mapping method for a time division duplex (TDD) mode, comprising: on a first carrier frequency, alternatively mapping a first broadcast channel and a second broadcast channel to a sixth subframe among a plurality of subframes included in each frame of uplink-downlink configuration for the TDD mode, and mapping a third broadcast channel to a first subframe among the plurality of subframes; and on a second carrier frequency, mapping the first broadcast channel to the sixth subframe every other frame.

In addition, in the channel mapping method according to an embodiment of the present disclosure, wherein there is a predetermined frequency offset between the first carrier frequency and the second carrier frequency.

In addition, in the channel mapping method according to an embodiment of the present disclosure, wherein the first broadcast channel, the second broadcast channel, and the third broadcast channel are a primary synchronization channel, a secondary synchronization channel, and a physical broadcast channel, respectively.

According to another embodiment of the present disclosure, there is provided a channel mapping apparatus for a time division duplex (TDD) mode, comprising: a first mapping unit configured to, on a first carrier frequency, alternatively map a first broadcast channel and a second broadcast channel to a sixth subframe among a plurality of subframes included in each frame of uplink-downlink configuration for the TDD mode, and map a third broadcast channel to a first subframe among the plurality of subframes; and a second mapping unit configured to, on a second carrier frequency, map the first broadcast channel to the sixth subframe every other frame.

In addition, in the channel mapping apparatus according to another embodiment of the present disclosure, wherein there is a predetermined frequency offset between the first carrier frequency and the second carrier frequency.

In addition, in the channel mapping apparatus according to another embodiment of the present disclosure, wherein the first broadcast channel, the second broadcast channel, and the third broadcast channel are a primary synchronization channel, a secondary synchronization channel, and a physical broadcast channel, respectively.

According to still another embodiment of the present disclosure, there is provided a base station for a time division duplex (TDD) mode, comprising the channel mapping apparatus as described above.

According to still another embodiment of the present disclosure, there is provided a channel detecting method in a user equipment for a time division duplex (TDD) mode, comprising: scanning a received frame of uplink-downlink configuration for the TDD mode at a predetermined bandwidth until a first broadcast channel is detected at a specific carrier frequency; and scanning a next frame of the received frame at the specific carrier frequency, wherein in a case where a second broadcast channel is detected in the next frame, the specific carrier frequency is a first carrier frequency, and the next frame is scanned at the first carrier frequency to detect a third broadcast channel; in a case where the second broadcast channel is not detected in the next frame, the specific carrier frequency is a second carrier frequency, and the next frame is scanned at the first carrier frequency to detect the second broadcast channel, and the next frame is scanned at the first carrier frequency to detect the third broadcast channel.

In addition, in the channel detecting method according to still another embodiment of the present disclosure, wherein there is a predetermined frequency offset between the first carrier frequency and the second carrier frequency.

In addition, in the channel detecting method according to still another embodiment of the present disclosure, the first broadcast channel and the second broadcast channel are alternately in a sixth sub frame among a plurality of subframes included in each frame of the first carrier frequency, the third broadcast channel is in a first subframe among the plurality of subframes, and the first broadcast channel is in a sixth subframe among a plurality of subframes of the second carrier frequency every other frame.

In addition, in the channel detecting method according to still another embodiment of the present disclosure, wherein the first broadcast channel, the second broadcast channel, and the third broadcast channel are a primary synchronization channel, a secondary synchronization channel, and a physical broadcast channel, respectively.

According to still another embodiment of the present disclosure, there is provided a channel detecting apparatus for a time division duplex (TDD) mode, comprising: a receiving unit configured to receive a signal frame of uplink-downlink configuration for the TDD mode; and a channel detecting unit configured to scan a received frame of uplink-downlink configuration for the TDD mode at a predetermined bandwidth until a first broadcast channel is detected at a specific carrier frequency, and scan a next frame of the received frame at the specific carrier frequency, wherein in a case where a second broadcast channel is detected in the next frame, the specific carrier frequency is a first carrier frequency, and the next frame is scanned at the first carrier frequency to detect a third broadcast channel; in a case where the second broadcast channel is not detected in the next frame, the specific carrier frequency is a second carrier frequency, the next frame is scanned at the first carrier frequency to detect the second broadcast channel, and the next frame is scanned at the first carrier frequency to detect the third broadcast channel.

In addition, in the channel detecting method according to still another embodiment of the present disclosure, wherein there is a predetermined frequency offset between the first carrier frequency and the second carrier frequency.

In addition, in the channel detecting method according to still another embodiment of the present disclosure, wherein the first broadcast channel and the second broadcast channel are alternately in a sixth subframe among a plurality of subframes included in each frame of the first carrier frequency, the third broadcast channel is in a first subframe among the plurality of subframes, and the first broadcast channel is in a sixth subframe among a plurality of subframes of the second carrier frequency every other frame.

In addition, in the channel detecting method according to still another embodiment of the present disclosure, wherein the first broadcast channel, the second broadcast channel, and the third broadcast channel are a primary synchronization channel, a secondary synchronization channel, and a physical broadcast channel, respectively.

According to still another embodiment of the present disclosure, there is provided a user equipment for a time division duplex (TDD) mode, comprising the channel detecting apparatus as described above.

The channel mapping method and apparatus and the base station for the TDD mode according to the embodiment of the present disclosure can implement reasonable mapping of the primary synchronization signal (PSS), the secondary synchronization signals

(SSS), and the physical broadcast channel (PBCH) according to uplink-downlink configuration for the TDD mode based on a primary signal sequence design for the FDD mode, without introducing additional overhead. In addition, the channel mapping method and apparatus and the base station for the TDD mode can accurately detect the primary synchronization signal (PSS), the secondary synchronization signal (SSS), and the physical broadcast channel (PBCH) or the like based on the channel mapping scheme for the TDD mode, so as to complete the process of cell search synchronization and so on.

It is to be understood that both the foregoing general description and the following detailed description are exemplary, and intended to provide further explanation of the technology sought for protection.

### BRIEF DESCRIPTION OF THE DRAWINGS

The foregoing and other objects, features and advantages of the present disclosure will become more apparent from the detailed description of the embodiments of the present disclosure in conjunction with the accompanying drawings. The drawings are to provide further understanding for the embodiments of the present disclosure and constitute a portion of the specification, and are intended to interpret the present disclosure together with the embodiments rather than to limit the present disclosure. In the drawings, the same reference sign generally refers to the same component or step.
FIG. 1 is a schematic diagram outlining a communication system according to an embodiment of the present disclosure.
FIG. 2 is a schematic diagram illustrating uplink-downlink configuration for a TDD mode.
FIG. 3 is a flowchart illustrating a channel mapping method for a TDD mode according to an embodiment of the present disclosure.
FIG. 4 is a schematic diagram illustrating channel mapping for a TDD mode according to an embodiment of the present disclosure.
FIG. 5 is a block diagram illustrating a channel mapping apparatus for a TDD mode according to an embodiment of the present disclosure.
FIG. 6 is a block diagram illustrating a base station for a TDD mode according to an embodiment of the present disclosure.
FIG. 7 is a flowchart illustrating a channel detecting method for a TDD mode according to an embodiment of the present disclosure.
FIG. 8 is a block diagram illustrating a channel detecting apparatus for a TDD mode according to an embodiment of the present disclosure.
FIG. 9 is a block diagram illustrating a user equipment for a TDD mode according to an embodiment of the present disclosure.
FIGS. 10A and 10B are diagrams illustrating channel detection time for an FDD mode and channel detection time for a TDD mode according to an embodiment of the present disclosure.

### DETAILED DESCRIPTION

To make the objectives, technical solutions, and advantages of the present disclosure more clear, exemplary embodiments of the present disclosure will be described in detail with reference to the accompanying drawings. Obviously, the described embodiments merely are only part of the embodiments of the present disclosure, rather than all of the embodiments of the present disclosure, it should be understood that the present disclosure is not limited to the exemplary embodiments described herein. All other embodiments obtained by those skilled in the art without paying inventive efforts should all fall into the protection scope of the present disclosure.

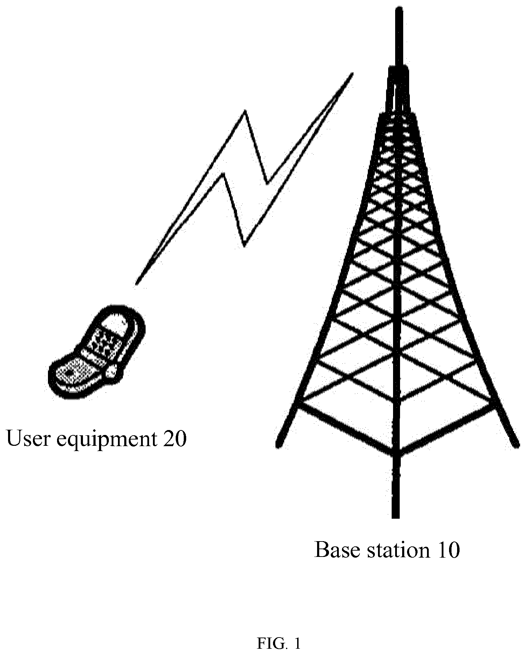

FIG. 1 is a schematic diagram outlining a communication system according to an embodiment of the present disclosure. As shown in FIG. 1, the communication system according to an embodiment of the present disclosure comprises a base station 10 and a user equipment (UE) 20. The base station 10 and the user equipment 20 perform transmission and reception of a communication signal based on a predetermined protocol over a predetermined communication channel.

The present disclosure mainly focuses on the NB-IoT scenario based on the LTE network system. Frequency Division Duplex (FDD) and Time Division Duplex (TDD) are two different duplex modes under the LTE standard, wherein the TDD will better satisfy the narrowband transmission mode such as NB-IoT. Uplink-downlink configuration for the TDD mode needs to be considered for channel mapping in the NB-IoT scenario.

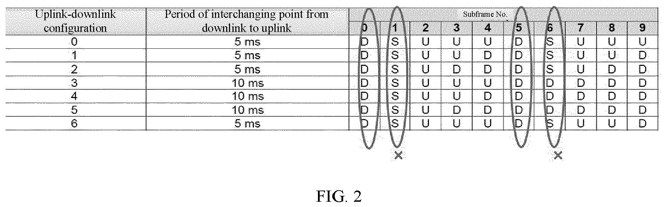

FIG. 2 is a schematic diagram illustrating uplink-downlink configuration for a TDD mode.

As shown in FIG. 2, in the TDD mode, in the uplink-downlink configuration 0 to the uplink-downlink configuration 6, the complete downlink subframe is the subframe #0 and the subframe #5, which are for mapping of the PBCH and the PSS, respectively. Furthermore, downlink pilot time slots (DwPTS) in some special subframes, that is, the subframe #1 and the subframe #6, do not have sufficient downlink OFDM symbols.

In order to solve the above problem, the present disclosure provides a mapping scheme for a TDD mode channel based on uplink-downlink configuration for the TDD mode and the main signal sequence design for the FDD mode, which extends the period on the time domain for the PSS and doubles its density in frequency, so as to maintain detection probability and detection time, and maintains density in frequency for the SSS and the PBCH. Specifically, a channel mapping method and a channel detecting method using this channel mapping scheme will be described in detail with reference to the accompanying drawings.

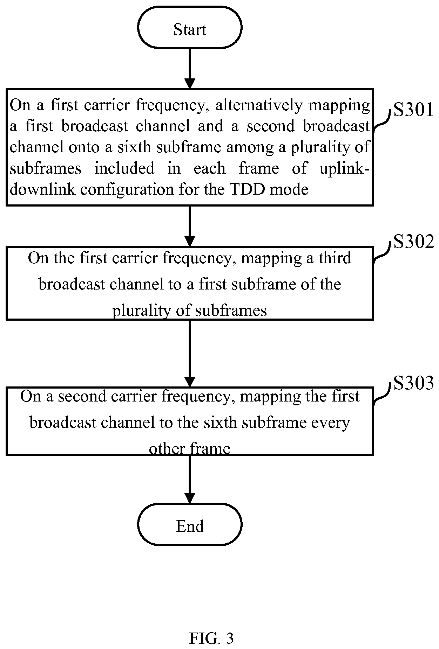

First, a channel mapping method according to the present disclosure will be described with reference to FIG. 3. The channel mapping method according to an embodiment of the present disclosure includes the following steps.

In step S301, on a first carrier frequency, a first broadcast channel and a second broadcast channel are alternatively mapped to a sixth subframe among a plurality of subframes included in each frame of uplink-downlink configuration for the TDD mode. In an embodiment of the present disclosure, the first broadcast channel and the second broadcast channel are a primary synchronization signal (PSS) channel and a secondary synchronization signal (SSS) channel, respectively, and the sixth subframe is the subframe #5. That is, the PSS and the SSS are interleaved-mapped to the subframe #5. Thereafter, the processing proceeds to step S302.

In step S302, on the first carrier frequency, a third broadcast channel is mapped to a first subframe among the plurality of subframes. In an embodiment of the present disclosure, the third broadcast channel is a Physical Broadcast Channel (PBCH). Thereafter, the processing proceeds to step S303.

In step S303, on a second carrier frequency, the first broadcast channel is mapped to the sixth subframe every other frame. In an embodiment of the present disclosure, the first carrier frequency and the second carrier frequency have a predetermined frequency offset to ensure that the user equipment (UE) receiving the signal can successfully perform channel detection.

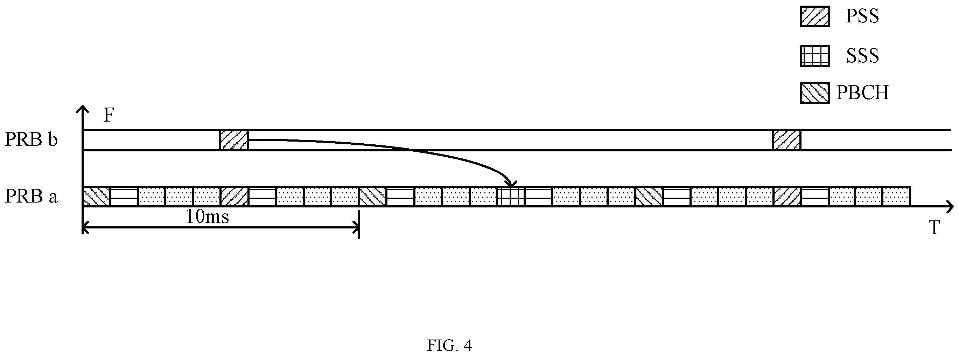

Channel mapping for the TDD mode according to the embodiment of the present disclosure is further described with reference to FIG. 4. As shown in FIG. 4, on the first carrier frequency *a*, the PSS and the SSS are alternatively mapped to the subframe #5, and the PBCH is mapped to the subframe #0. Further, on the second carrier frequency *b,* the PSS is mapped to the subframe #5 every other frame. There is a predetermined frequency offset between the first carrier frequency *a* and the second carrier frequency *b,* for example, half of the bandwidth.

As such, in the channel mapping method for the TDD mode according to the embodiment of the present disclosure, the PSS is mapped on the first carrier frequency *a* and the second carrier frequency *b* in terms of frequency domain, and the PSS is mapped every other frame in terms of time domain, thereby maintaining an overall density of the PSS, as well as the corresponding detection probability and detection time. For the SSS and the PBCH, density in the frequency domain and density in the time domain are maintained, and accordingly the signal sequence design in the FDD mode is continually used.

Further, the channel mapping method for the TDD mode according to the embodiment of the present disclosure is not limited thereto. In an alternative embodiment, the PSS and the SSS may be interleaved-mapped to the subframe #0, while the PBCH is mapped to the subframe #5. The channel mapping method such configured also maintains the overall density of the PSS, the SSS, and the PBCH as well as the corresponding detection probability and detection time, although the signal sequence design in the FDD mode is changed.

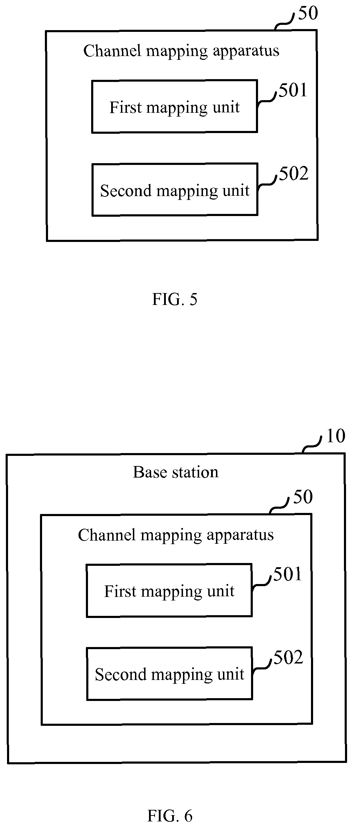

FIG. 5 is a block diagram illustrating a channel mapping apparatus for a TDD mode according to an embodiment of the present disclosure. As shown in FIG. 5, the channel mapping apparatus 50 for the TDD mode according to an embodiment of the present disclosure comprises a first mapping unit 501 and a second mapping unit 502.

Specifically, the first mapping unit 501 is configured to, on a first carrier frequency, alternatively map a first broadcast channel and a second broadcast channel to a sixth subframe among a plurality of subframes included in each frame of uplink-downlink configuration for the TDD mode, and map a third broadcast channel to a first subframe among the plurality of subframes. The second mapping unit 502 is configured to, on a second carrier frequency, map the first broadcast channel to the sixth subframe every other frame.

FIG. 6 is a block diagram illustrating a base station for a TDD mode according to an embodiment of the present disclosure. As shown in FIG. 6, the base station 10 for the TDD mode according to an embodiment of the present disclosure comprises the channel mapping apparatus 50 for the TDD mode according to the embodiment of the present disclosure described above with reference to FIG. 5. The respective units of the channel mapping apparatus 50 included in the base station 10 are the same as those described above with reference to FIG. 3, and repeated description thereof will be omitted herein.

Moreover, it will be readily understood that the base station 10 for the TDD mode according to an embodiment of the present disclosure may of course also comprise other components, and only components closely related to the present disclosure are shown in FIG. 6.

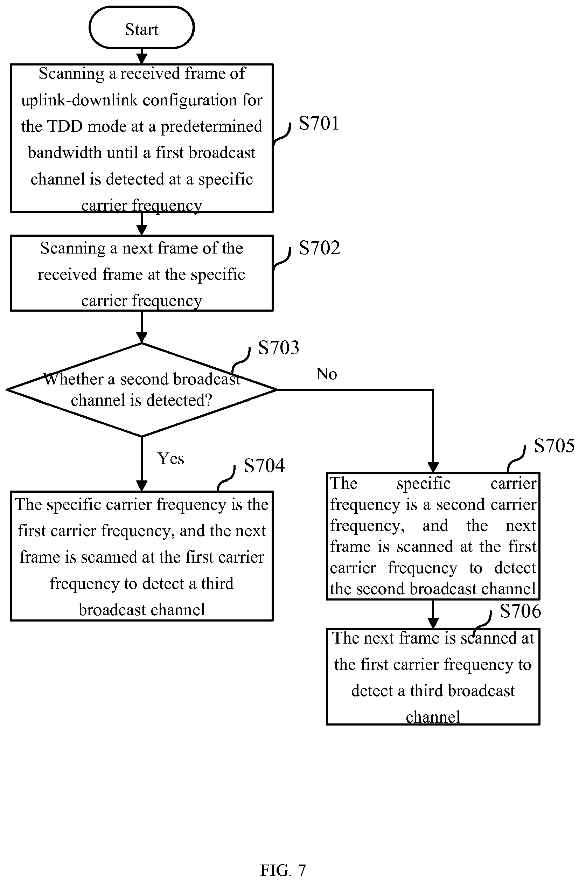

After the channel mapping method for the TDD mode and the channel mapping apparatus and the base station using the channel mapping method according to an embodiment of the present disclosure are described with reference to FIGS. 3 to 6, a channel detecting method corresponding to the channel mapping method for a TDD mode according to an embodiment of the present disclosure, a channel detecting apparatus and a user equipment using the channel detecting method will be further described below with reference to FIGS. 7 tolOB.

FIG. 7 is a flowchart illustrating a channel detecting method for a TDD mode according to an embodiment of the present disclosure. The channel detecting method according to an embodiment of the present disclosure comprises the following steps.

In step S701, a received frame of uplink-downlink configuration for the TDD mode is scanned at a predetermined bandwidth until a first broadcast channel is detected at a specific carrier frequency. As described above, in an embodiment of the present disclosure, the first broadcast channel is a primary synchronization signal (PSS) channel. For detection of the PSS, for example, sliding correlation may be made with a local sequence, and a peak position is the position of the PSS. Thereafter, the processing proceeds to step S702.

In step S702, a next frame of the received frame is scanned at the specific carrier frequency. In an embodiment of the present disclosure, scanning a next frame of the received frame is for performing detection of the second broadcast channel, that is, performing detection of the SSS. Thereafter, the processing proceeds to step S703.

In step S703, it is determined whether a second broadcast channel is detected by scanning a next frame of the received frame at the specific carrier frequency.

If an affirmative result is obtained in step S703, that is, the SSS is detected in the next frame of said frame, the processing proceeds to step S704.

In step S704, it is determined that the specific carrier frequency is the first carrier frequency, and the next frame is continued to be scanned at the first carrier frequency to detect a third broadcast channel. In an embodiment of the present disclosure, the third broadcast channel is a physical broadcast channel (PBCH). After detecting the synchronization signals (PSS and SSS), the PBCH is detected and decoded to obtain relevant system information.

Conversely, if a negative result is obtained in step S503, that is, the SSS is not detected in the next frame of said frame, the processing proceeds to step S705.

In step S705, the specific carrier frequency is a second carrier frequency, and the next frame is scanned at the first carrier frequency to detect the second broadcast channel. In an embodiment of the present disclosure, the second carrier frequency and the first carrier frequency have a predetermined frequency offset as described above with reference to FIGS. 3 and 4. For example, if the PSS is detected at a frequency from 0 to N_{PRB}/2, but the SSS is not detected in the next frame, it is instructed to further detect the related SSS at a higher frequency having a predetermined frequency offset from the frequency. If the PSS is detected at a frequency from N_{PRB}/2 to N_{PRB}, but the SSS is not detected in the next frame, it is instructed to further detect the related SSS at a lower frequency having a predetermined frequency offset from the frequency. Thereafter, the processing proceeds to step S706.

In step S706, the next frame is continued to be scanned at the first carrier frequency to detect a third broadcast channel.

In the case where the received frame of uplink-downlink configuration for the TDD mode adopts the channel mapping method for the TDD mode according to the embodiment of the present disclosure as described above with reference to FIGS. 3 and 4, the PSS and the SSS detected by the channel detecting method for the TDD mode according to the embodiment of the present disclosure as described with reference to FIG. 7 are alternately in the subframe #5 among a plurality of subframes included in each frame of the first carrier frequency, and the PBCH is in the subframe #0 among the plurality of subframes, and the PSS is also in the subframe #5 among a plurality of subframes of the second carrier frequency every other frame.

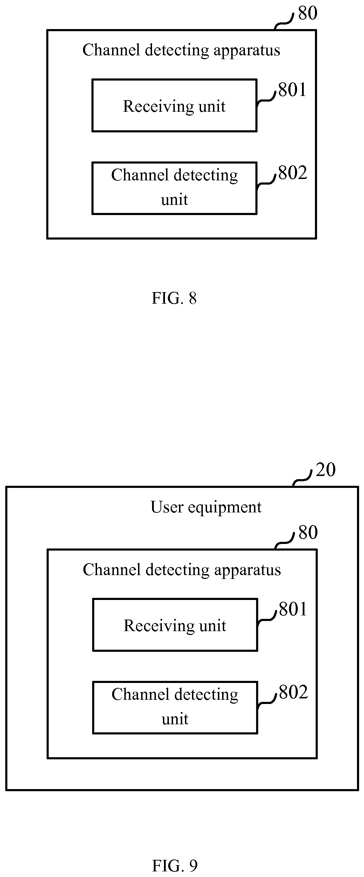

FIG. 8 is a block diagram illustrating a channel detecting apparatus for a TDD mode according to an embodiment of the present disclosure. As shown in FIG. 8, the channel detecting apparatus 80 for the TDD mode according to an embodiment of the present disclosure comprises a receiving unit 801 and a channel detecting unit 802.

Specifically, the receiving unit 801 is configured to receive a signal frame of uplink-downlink configuration for the TDD mode. The channel detecting unit 802 is configured to scan a received frame of uplink-downlink configuration for the TDD mode at a predetermined bandwidth until a first broadcast channel is detected at a specific carrier frequency, and scan a next frame of the received frame at the specific carrier frequency, wherein in a case where a second broadcast channel is detected in the next frame, the specific carrier frequency is a first carrier frequency, and the next frame is scanned at the first carrier frequency to detect a third broadcast channel; in a case where the second broadcast channel is not detected in the next frame, the specific carrier frequency is a second carrier frequency, and the next frame is scanned at the first carrier frequency to detect the second broadcast channel, and the next frame is scanned at the first carrier frequency to detect the third broadcast channel. In an embodiment of the present disclosure, there is a predetermined frequency offset between the first carrier frequency and the second carrier frequency. The PSS and the SSS detected by the channel detecting apparatus 80 are alternately in the subframe #5 among a plurality of subframes included in each frame of the first carrier frequency, and the PBCH is in the subframe #0 in the plurality of subframes, and the PSS is also in the subframe #5 among a plurality of subframes of the second carrier frequency every other frame.

FIG. 9 is a block diagram illustrating a user equipment for a TDD mode according to an embodiment of the present disclosure. As shown in FIG. 9, the user equipment 20 for the TDD mode according to an embodiment of the present disclosure comprises the channel detecting apparatus 80 for the TDD mode according to the embodiment of the present disclosure as described above with reference to FIG. 8. The respective units of the channel detecting apparatus 80 included in the user equipment 20 are the same as those described above with reference to FIG. 8, and repeated description thereof will be omitted herein.

Moreover, it will be readily understood that the user equipment 20 for the TDD mode according to an embodiment of the present disclosure may of course also comprise other components, only the components closely related to the present disclosure are shown in FIG. 9.

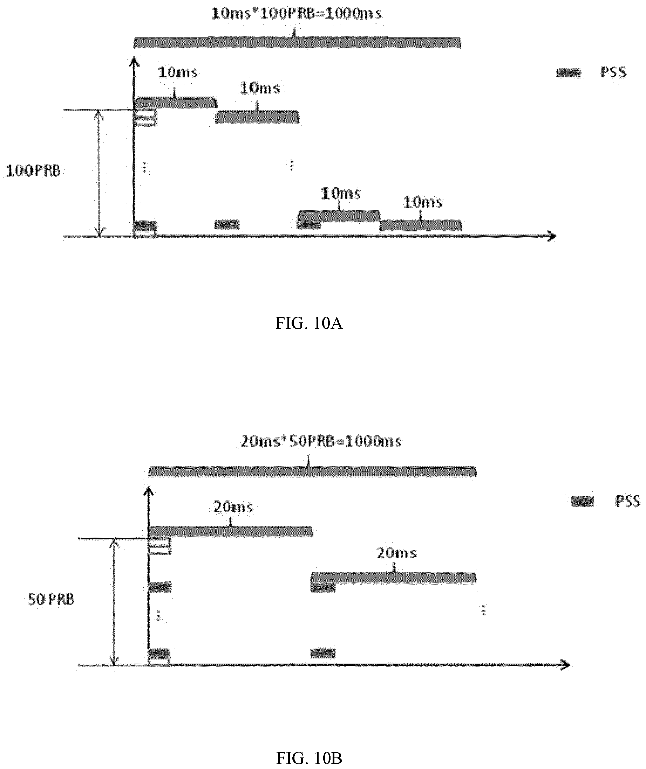

FIGS. 10A and 10B are diagrams illustrating channel detection time for an FDD mode and channel detection time for a TDD mode according to an embodiment of the present disclosure.

As shown in FIG. 10A, in the FDD mode, the maximum channel detection time required to perform channel detection is 10 ms × 100 PRB = 1000 ms.

As shown in FIG. 10B, in the TDD mode according to an embodiment of the present disclosure, the maximum channel detection time required to perform channel detection is 20 ms × 50 PRB = 1000 ms.

That is to say, the channel mapping method and the channel detecting method for the TDD mode according to the embodiment of the present disclosure maintain the same channel detection time as the FDD mode, without introducing any additional overhead. It is easily understood that the detection time as shown in FIG. 10B is merely an example, not a limitation. The channel detecting method for the TDD mode according to the embodiment of the present disclosure may have different numbers of PRBs and different detection time.

The method and apparatus for channel mapping and detecting, the base station, and the user equipment according to the embodiment of the present disclosure have been described above with reference to FIGS. 1 to 10B. The channel mapping method and apparatus and the base station for the TDD mode can implement reasonable mapping of the primary synchronization signal (PSS), the secondary synchronization signals (SSS), and the physical broadcast channel (PBCH) according to uplink-downlink configuration for the TDD mode based on a primary signal sequence design for the FDD mode, without introducing additional overhead. In addition, the channel mapping method and apparatus and the base station for the TDD mode can accurately detect the primary synchronization signal (PSS), the secondary synchronization signal (SSS), and the physical broadcast channel (PBCH) or the like based on the channel mapping scheme for the TDD mode, so as to complete the process of cell search synchronization and so on.

It should be noted that, in the specification, the terms "comprise", "include" and any other variations thereof intend to cover nonexclusive inclusion so that the procedure, the method, the product or the equipment including a series of elements include not only these elements, but also other elements which are not listed explicitly, or also include inherent elements of these procedure, method, product or equipment. In the case that there is no further limitation, elements defined by the expressions "comprise one..." do not exclude there being additional identity elements in the procedure, method, product or equipment of the elements.

In addition, in this specification, the expressions like "first", "second", etc. are used for convenience of description only, and do not mean that the defined unit must be implemented as a plurality of separate units, It does not mean that there are prioritized steps in the defined steps, and so on

Finally, it should be noted that, the above-described series of processings do not only comprise processings executed chronologically in the order mentioned here, and also comprise processings executed in parallel or individually but not chronologically.

Through the above description of the implementations, a person skilled in the art can clearly understand that the present disclosure may be implemented in a manner of software plus a necessary hardware platform, and of course the present disclosure may also be implemented fully by hardware. Based on such understanding, the technical solution of the present disclosure that contributes to the background art may be embodied in whole or in part in the form of a software product. The computer software product may be stored in a storage medium, such as ROM/RAM, disk, CD-ROM, and include several instructions for causing a computer apparatus (which may be a personal computer, a server, or a network device) to perform the method described in the various embodiments of the present disclosure or certain parts thereof.

Although the present disclosure has been described in detail in the above, specific examples are applied in this text to demonstrate the principles and implementations of the present disclosure, these descriptions of the above embodiments are only to help understand the method for the present disclosure and its core concept. Meanwhile, for a person with ordinary skill in the art, depending on the concepts of the present disclosure, modifications may be made to the specific implementations and disclosures. To sum up, contents of this specification should not be construed as limiting the present disclosure.

## Claims

1. A channel mapping method for a time division duplex (TDD) mode, comprising:
on a first carrier frequency, alternatively mapping a first broadcast channel and a second broadcast channel to a sixth subframe among a plurality of subframes included in each frame of uplink-downlink configuration for the TDD mode, and mapping a third broadcast channel to a first subframe among the plurality of subframes; and
on a second carrier frequency, mapping the first broadcast channel to the sixth subframe every other frame.

2. The channel mapping method according to claim 1, wherein there is a predetermined frequency offset between the first carrier frequency and the second carrier frequency.

3. The channel mapping method according to claim 1 or 2, wherein the first broadcast channel, the second broadcast channel, and the third broadcast channel are a primary synchronization channel, a secondary synchronization channel, and a physical broadcast channel, respectively.

4. A channel mapping apparatus for a time division duplex (TDD) mode, comprising:
a first mapping unit configured to, on a first carrier frequency, alternatively map a first broadcast channel and a second broadcast channel to a sixth subframe among a plurality of subframes included in each frame of uplink-downlink configuration for the TDD mode, and map a third broadcast channel to a first subframe among the plurality of subframes; and
a second mapping unit configured to, on a second carrier frequency, map the first broadcast channel to the sixth subframe every other frame.

5. The channel mapping apparatus according to claim 4, wherein there is a predetermined frequency offset between the first carrier frequency and the second carrier frequency.

6. The channel mapping apparatus according to claim 4 or 5, wherein the first broadcast channel, the second broadcast channel, and the third broadcast channel are a primary synchronization channel, a secondary synchronization channel, and a physical broadcast channel, respectively.

7. A base station for a time division duplex (TDD) mode, comprising the channel mapping apparatus according to claim 4.

8. A channel detecting method in a user equipment for a time division duplex (TDD) mode, comprising:
scanning a received frame of uplink-downlink configuration for the TDD mode at a predetermined bandwidth until a first broadcast channel is detected at a specific carrier frequency; and
scanning a next frame of the received frame at the specific carrier frequency, wherein
in a case where a second broadcast channel is detected in the next frame, the specific carrier frequency is a first carrier frequency, and the next frame is scanned at the first carrier frequency to detect a third broadcast channel;
in a case where the second broadcast channel is not detected in the next frame, the specific carrier frequency is a second carrier frequency, the next frame is scanned at the first carrier frequency to detect the second broadcast channel, and the next frame is scanned at the first carrier frequency to detect the third broadcast channel.

9. The channel detecting method according to claim 8, wherein
there is a predetermined frequency offset between the first carrier frequency and the second carrier frequency.

10. The channel detecting method according to claim 8, wherein
the first broadcast channel and the second broadcast channel are alternately in a sixth subframe among a plurality of subframes included in each frame of the first carrier frequency, the third broadcast channel is in a first subframe among the plurality of subframes, and
the first broadcast channel is in a sixth subframe among a plurality of subframes of the second carrier frequency every other frame.

11. The channel detecting method according to any one of claims 8 to 10, wherein the first broadcast channel, the second broadcast channel, and the third broadcast channel are a primary synchronization channel, a secondary synchronization channel, and a physical broadcast channel, respectively.

12. A channel detecting apparatus for a time division duplex (TDD) mode, comprising:
a receiving unit configured to receive a signal frame of uplink-downlink configuration for the TDD mode; and
a channel detecting unit configured to scan a received frame of uplink-downlink configuration for the TDD mode at a predetermined bandwidth until a first broadcast channel is detected at a specific carrier frequency, and scan a next frame of the received frame at the specific carrier frequency, wherein
in a case where a second broadcast channel is detected in the next frame, the specific carrier frequency is a first carrier frequency, and the next frame is scanned at the first carrier frequency to detect a third broadcast channel;
in a case where the second broadcast channel is not detected in the next frame, the specific carrier frequency is a second carrier frequency, the next frame is scanned at the first carrier frequency to detect the second broadcast channel, and the next frame is scanned at the first carrier frequency to detect the third broadcast channel.

13. The channel detecting apparatus according to claim 12, wherein
there is a predetermined frequency offset between the first carrier frequency and the second carrier frequency.

14. The channel detecting apparatus according to claim 12, wherein
the first broadcast channel and the second broadcast channel are alternately in a sixth subframe among a plurality of subframes included in each frame of the first carrier frequency, the third broadcast channel is in a first subframe among the plurality of subframes, and
the first broadcast channel is in a sixth subframe among a plurality of subframes of the second carrier frequency every other frame.

15. The channel detecting apparatus according to any one of claims 12 to 14, wherein the first broadcast channel, the second broadcast channel, and the third broadcast channel are a primary synchronization channel, a secondary synchronization channel, and a physical broadcast channel, respectively.

16. A user equipment for a time division duplex (TDD) mode, comprising the channel detecting apparatus according to claim 12.
